# EUROPEAN PATENT APPLICATION

(11) **EP 3 859 834 A1**
(43) Date of publication of application: **04.08.2021**
(21) Application number: 18935109.1
(22) Date of filing: 13.12.2018
(51) Int. Cl.: H01M 4/36, H01M 4/38, H01M 4/587, H01M 4/62, H01M 10/052, C01B 33/02, C01B 32/21, C01B 32/05

(54) **ANODE ACTIVE MATERIAL FOR LITHIUM SECONDARY BATTERY AND LITHIUM SECONDARY BATTERY COMPRISING SAME**

(30) Priority: 28.09.2018 KR 20180116485
(71) Applicant: POSCO, Gyeongsangbuk-do 37859 (KR); Research Institute of Industrial Science & Technology, Pohang-si, Gyeongsangbuk-do 37673 (KR)
(72) Inventor: YOU, Seung Jae, Pohang-si, Gyeongsangbuk-do 37655 (KR); KIM, Yong Jung, Pohang-si, Gyeongsangbuk-do 37673 (KR); WOO, Jung Gyu, Pohang-si, Gyeongsangbuk-do 37671 (KR); KANG, Eun-Tae, Pohang-si, Gyeongsangbuk-do 37681 (KR)
(74) Representative: Potter Clarkson
(86) International application number: PCT/KR2018/015869
(87) International publication number: WO 2020/067609

(57) **Abstract**

An embodiment of the present invention provides an anode active material for a lithium secondary battery which is a porous silicon-carbon-based composite in which a plurality of nano-silicon particles are embedded in a carbon-based material, the composite having a plurality of pores, wherein the carbon-based material comprises graphite particles, soft carbon, hard carbon, or a combination thereof, and the soft carbon, in the carbon-based material, is in the form of a carbon layer.

## Description

### [Technical Field]

An anode active material for a lithium secondary battery and a lithium secondary battery including the same are disclosed.

### [Background Art]

Lithium secondary batteries are the most widely used secondary battery system for portable electronic communication devices, electric vehicles, and energy storage devices.

Compared with commercially available aqueous secondary batteries (Ni-Cd, Ni-MH, etc.), the lithium secondary batteries have advantages such as high energy density, a high operation voltage, a relatively low self-discharge rate, and the like.

However, there is still a lot of room for improvement in electrochemical properties, when considering more efficient usage time in the portable devices, energy property improvement in the electric vehicles, and the like. Accordingly, lots of research and developments are still in progress on four major raw materials such as an anode, a cathode, an electrolyte, a separator, and the like.

For the anode among these raw materials, graphite-based materials exhibiting excellent capacity storage characteristics and efficiency are commercially available. However, the graphite-based materials have relatively low theoretical capacity (for example, 372 mAh/g for a LiC₆ anode) and a low discharge capacity ratio and thus are not somewhat insufficient to meet high energy and high power density characteristics of batteries required in the market.

Accordingly, many researchers are interested in Group IV elements (Si, Ge, Sn) on the periodic table. Among them, Si in particular is attracting attentions due to the very high theoretical capacity (for example, 3600 mAh/g for Li₁₅Si₄) and low operation voltage (about 0.1 V vs. Li/Li+) characteristics.

However, general Si-based anode materials exhibit low discharge capacity ratio characteristics with a volume change of up to 300% during the cycles and are actually difficult to apply to batteries.

### [Disclosure]

In an embodiment of the present invention, a carbon layer is disposed on the surface of the nano-silicon particles to provide a conductive path. Due to the carbon layer, expansion of the nano-silicon particles may be controlled, and low conductivity of the nano-silicon particles may be compensated.

Thereby, it is possible to induce a reversible reaction, and to provide an anode active material for a lithium secondary battery having a high cycle-life and high rate characteristics with an increase in capacity.

An anode active material for a lithium secondary battery according to an embodiment of the present invention is a porous silicon-carbon-based composite in which a plurality of nano-silicon particles are embedded in a carbon-based material, wherein the carbon-based material includes graphite particles, soft carbon, hard carbon, or a combination thereof, and the soft carbon, in the carbon-based material, is in the form of a carbon layer.

The graphite particles, hard carbon, or a combination thereof may be included in the carbon layer.

A softening point of the pitch may be 250 °C or higher.

A porosity of the anode active material may be 30 volume% or less based on the total volume of the anode active material.

A specific surface area (BET) of the anode active material may be 5.0 m²/g or less.

An expansion rate based on the 50^{th} cycle of the anode active material may be 70% or less.

A content of the nano-silicon may be 25 wt% to 50 wt% based on 100 wt% of the porous silicon-carbon-based composite.

In another embodiment of the present invention, a method of preparing an anode active material for a lithium secondary battery includes mixing nano-silicon particles and a carbon-based raw material by dry milling to prepare a porous silicon-carbon-based mixture, mixing the porous silicon-carbon-based mixture with an aqueous binder to prepare a mixed powder, mixing the mixed powder with distilled water to prepare a mixed solution, spray-drying the mixed solution to prepare primary particles, inserting the primary particles in a mold and press-molding to prepare a molded body, heat-treating the molded body, and pulverizing and sieving the heat-treated molded body.

The carbon-based raw material may include graphite particles, pitch, or a combination thereof.

Before the preparing of the molded body, the pitch may exist in the form of powder particles, and the particle diameter (D50) of the pitch may be less than 2 µm.

A softening point of the pitch may be 250 °C or higher.

The preparing of the molded body may be performed in a temperature range of 50 to 100 °C or higher than the softening point of the pitch.

In the preparing of the molded body, the pitch may have a viscosity.

After heat-treating of the molded body, the pitch may exist in the shape of a solidified carbon layer.

Specifically, by heat-treating of the molded body, the pitch may be carbonized into soft carbon, and the aqueous binder may be carbonized into hard carbon.

The heat-treating the molded body may be performed in an inert atmosphere and at less than 1000 °C.

A lithium secondary battery according to another embodiment of the present invention includes a cathode, an anode, and an electrolyte, and the anode may be a lithium secondary battery including the anode active material for a lithium secondary battery.

Due to the carbon layer disposed on the surface of the nano-silicon particles, the pores existing inside the porous silicon-carbon-based composite may be minimized. Thereby, when applied to a battery, side reactions with the electrolyte may be suppressed. Thus, it is possible to improve the cycle-life of the electrochemical performance.

### [Description of the Drawings]

FIG. 1 is a schematic view of an anode active material according to Example 1.
FIG. 2 is a schematic view of an anode active material according to Example 2.
FIG. 3 is a cross-sectional view of the anode active material according to Example 1 and Comparative Example 1 with SEM.
FIG. 4 shows the EDS mapping analysis result of Example 1.
FIG. 5 is a graph showing the initial efficiency according to the cycle of the full cell (CR2032 coin full cell) according to Comparative Example 1 and Examples 1 and 2.
FIG. 6 is a graph showing capacity retention rates (cycle-life) according to the cycle of the full cells (CR2032 coin full cells) according to Comparative Example 1 and Examples 1 and 2.
FIG. 7 is a graph showing expansion rates according to the cycle of the half cells (CR2032 coin half cells) according to Comparative Example 1 and Examples 1 and 22.

### [Mode for Invention]

Hereinafter, embodiments of the present invention are described in detail. However, these embodiments are exemplary, the present invention is not limited thereto and the present invention is defined by the scope of claims.

An anode active material for a lithium secondary battery according to an embodiment of the present invention is a porous silicon-carbon-based composite in which a plurality of nano-silicon particles are embedded in a carbon-based material, wherein the carbon-based material includes graphite particles, soft carbon, hard carbon or a combination thereof.

In this case, the soft carbon in the carbon-based material may be in the shape of a carbon layer.

First, the porous silicon-carbon-based composite may have a form in which a plurality of nano-silicon particles are embedded in a carbon-based material and include a plurality of pores.

It may be capable of maintaining electrical contact with internal constituent materials because they are embedded by a carbon-based material even if the volume of the plurality of nano-silicon particles is expanded or contracted.

In addition, the silicon particles included in the composite having a stable porous structure and having a nano-scale size may not only minimize volume expansion, but also contribute to securing a high capacity of the anode active material.

In addition, the nano-silicon particles may not require a separate pulverizing process because they are synthesized by a dry method including thermal evaporation, chemical vapor deposition (CVD), physical vapor deposition (PVD), electromagnetic melting, and simultaneous volatilization. Specifically, the average particle diameter (D50) of the nano-silicon particles may be 30 to 100 nm.

Herein, the carbon-based material may be graphite, soft carbon hard carbon, or a combination thereof.

Specifically, when graphite is included as a carbon-based material, long-term cycle-life characteristics may be supplemented with excellent reversibility of graphite. In addition, the particle diameter (D50) of the graphite may be 10 µm to 40 µm. Specifically, it may be flake-shaped graphite sieved with #635 mesh (20 µm).

The soft carbon may be derived from pitch among carbon-based raw materials to be described later. Accordingly, in the case of using a pitch, structural stability may be enhanced after carbonization through heat treatment.

The hard carbon may be derived from an aqueous binder used in a method of preparing an anode active material for a lithium secondary battery to be described later.

In this case, the soft carbon in the carbon-based material may be in the shape of a carbon layer.

In the present specification, the term "solidified carbon layer" or "carbon layer" may mean a carbon layer formed by solidifying a pitch having a viscosity above a softening point after heat treatment.

In addition, the carbon-based material may be included in the carbon layer.

Specifically, the graphite, hard carbon, or combination thereof may be embedded in the carbon layer.

The carbon layer may be disposed on the surface of nano-silicon particles included in the porous silicon-carbon composite.

Accordingly, a binding force between the nano-silicon particles and other carbon-based materials may be strengthened, thereby protecting them from the electrolyte. In addition, the carbon layer may further prevent expansion of the nano-silicon particles and may provide a conductive path.

In addition, although described above, the carbon layer may be derived from pitch. Specific characteristics of the pitch are the same as the pitch to be described later.

A content of the nano-silicon may be 25 wt% to 50wt%, more specifically 25 wt% to 40 wt% based on 100 wt% of the porous silicon-carbon-based composite. When a content of the nano-silicon satisfies the above range, excellent capacity characteristics may be ensured and a volume expansion of the electrode may be suppressed due to the progress of charging and discharging with respect to the battery to which the anode active material of the present embodiment is applied.

In addition, an average particle diameter (D50) of the nano-silicon particles may be 30 nm to 100 nm.

In this way, silicon particles having a nano-sized average particle diameter may minimize volume expansion due to charging and discharging of a battery.

The aqueous binder material used to form the porous silicon-carbon composite is carbonized to become hard carbon. Such hard carbon may degrade properties of the silicon-carbon-based composite, and in order to prevent this, a polymer material having a residual carbon amount in the range of 5% to 10% after carbonization through heat treatment is suitable.

Specifically, the aqueous binder may include at least one selected from polyacrylic acid (PAA), Arabic gum, polyvinyl alcohol (PVA), polyethylene glycol (Poly ethylene glycohol, PEG), Pluronic® (F-127), and a cellulose-based compound.

In addition, the pitch is carbonized to become the above-described soft carbon. Pitch may also function as a binder stably supporting the porous structure. Accordingly, since the hard carbon and the soft carbon are dispersed and positioned between pores of the porous silicon-carbon-based composite, a porous structure of the silicon-carbon-based composite may be prevented from collapse despite the repetitive charge/discharge cycles, when the anode active material according to one embodiment of the present invention is applied.

The pitch may have a particle diameter (D50) of less than 2 µm.

Specifically, since the pitch is particulates having the aforementioned nano level particle diameter, when dispersed in distilled water, more excellent dispersion effects may be obtained during a process of preparing the anode active material, which is described later.

The pitch may have a fixed carbon value of 50 or more.

As the fixed carbon value of the pitch is increased, Si having low self-conductivity and conductive paths are generated, thereby inducing an increase in capacity and efficiency. When the fixed carbon value satisfies the range, inner porosity of the anode active material of the present example embodiment may be reduced. Accordingly, a side reaction with the electrolyte may also be reduced, resultantly contributing to increasing initial efficiency of a battery.

The pitch may have a β-resin value of greater than or equal to 20.

Specifically, the β-resin value refers to a value excluding an amount of benzene-insoluble quinoline from an amount of benzene-insoluble quinoline. This beta-resin value is proportional to cohesiveness. In one embodiment of the present invention, since pitch satisfying the range of the β-resin value is included, the porous structure of the porous silicon-carbon-based composite may be more stably maintained. Accordingly, a lithium secondary battery having excellent cycle-life characteristics and electrode plate expansion characteristics may be realized.

An expansion rate of the anode active material may be less than or equal to 70% based on that at the 50^{th} cycle.

When the expansion rate based on that at the 50^{th} cycle satisfies the above range, the anode active material may be alleviated from volume expansion. When the anode active material is applied to a battery, cycle-life characteristics may be improved.

Based on entire volume (100 volume%) of the anode active material, the pores may have a volume of less than or equal to 30 volume%.

When the anode active material has porosity within the range, volume expansion of silicon may be effectively alleviated.

The anode active material may have a specific surface area (BET) of less than or equal to 5.0 m²/g.

When the specific surface area of the anode active material satisfies the range, a lithium secondary battery using the same may have excellent characteristics.

The anode active material may have a D50 particle diameter of 10 µm to 15 µm.

When the anode active material has a D50 particle diameter beyond the range, the particles may have a damage due to rolls during the rolling after the coating, which may deteriorate overall performance such as battery efficiency, a cycle-life, an electrode expansion rate, and the like.

A method of preparing an anode active material for a lithium secondary battery according to another embodiment of the present invention includes mixing nano-silicon particles and a carbon-based raw material by dry milling to prepare a porous silicon-carbon-based mixture, mixing the porous silicon-carbon-based mixture with an aqueous binder to prepare a mixed powder, mixing the mixed powder with distilled water to prepare a mixed solution, spray-drying the mixed solution to prepare primary particles, inserting the primary particles in a mold and press-molding to prepare a molded body, heat-treating the molded body, and pulverizing and sieving the heat-treated molded body.

First, the nano-silicon particles and the carbon-based raw material may be mixed through the dry milling to prepare the porous silicon-carbon-based mixture.

Herein, the nano-silicon particles are the same as described in the anode active material for a lithium secondary battery and thus not described again.

The carbon-based raw material may be graphite, pitch, or a combination thereof. As will be described later, the pitch becomes soft carbon after the heat treatment.

Specifically, after attaching the nano-silicon particles to the carbon-based raw material through the dry milling, the nano-silicon particles may maintain an electrical contact with other materials despite volume expansion and contraction according to the cycling when this anode active material is applied to a battery. Specifically, the carbon-based raw material may control the expansion of the nano-silicon particles.

In addition, the milling process may use a mechano fusion or a ball mill process. However, the milling process is not limited thereto but may include any process through a contact with powder.

Thereafter, the mixing of the porous silicon-carbon-based mixture with an aqueous binder to prepare a mixed powder may be performed.

At this time, based on 100 parts by weight of the porous silicon-carbon-based mixture, the aqueous binder may be included in an amount of 5 parts by weight or less.

Specifically, when the aqueous binder is included within the range, the dispersion of the porous silicon-carbon-based mixture and the pitch in the mixed solution described later may be activated.

As will be described later, the aqueous binder becomes hard carbon after the heat treatment.

Subsequently, the mixed powder may be mixed with the distilled water to prepare the mixed solution. Specifically, after mixing the mixed powder with the distilled water, the obtained mixture may be stirred at room temperature for predetermined time to prepare the mixed solution.

Herein, the aqueous binder plays a role of well dispersing the nano-silicon-carbon-based mixture and pitch particles in the solution into a solvent.

Herein, the pitch has a particle diameter (D50) of less than 2 µm. Accordingly, a dense carbon layer may be formed on the surfaces of the nano-silicon particles through the press-molding described later.

In addition, specific characteristics of the aqueous binder and the pitch are the same as described above in the anode active material for a secondary battery and thus will not be described again.

In addition, the mixed solution may be used in the aqueous spray drying process described later. Accordingly, the solvent of the mixed solution for the spray drying may be distilled water.

Specifically, when a solvent such as ethanol, isopropylalcohol (IPA), acetone, and the like is applied thereto, a binding force between the nano-silicon particles and the carbon-based material is deteriorated, resulting in decreasing performance of a battery to which it is applied.

Thereafter, by spray drying the mixed solution, the primary particles may be prepared.

Specifically, the aforementioned mixed solution may be spray-dried to prepare a spherical porous silicon-carbon-based material as the primary particles. More specifically, when the spray drying process is not performed, there may be a limit in uniformly dispersing the nano-silicon particles and the carbon-based material. In other words, the dry milling process alone may not achieve as much dispersion effects as the spray drying process.

In addition, when the dispersion effects are deteriorated, side effects such as cycle-life deterioration, severe expansion, and the like may occur in measuring electrochemical performance of a battery.

Thereafter, a molded body is manufactured by inserting the primary particles into a mold and press-molding may be performed.

The preparing of the molded body may be performed at a temperature range of 50 °C to 100 °C or higher than the softening point of the pitch. The softening point of the pitch used in an embodiment of the present invention may be 250 °C or higher.

Accordingly, when the press-molding is performed within the temperature range, the above pores inside the porous silicon-carbon-based material may be minimized. Specifically, when the temperature range during the press-molding is controlled to be 50 °C to 100 °C higher than the softening point of the pitch, the pitch may have viscosity and fill the pores in the porous silicon-carbon-based material. Since the pores in the porous particles provide side reaction sites with the electrolyte when applied to a battery and deteriorate electrochemical performance, electrochemical properties may be improved by controlling the temperature within the temperature range.

Specifically, the pitch may be present as a coating layer on the surfaces of the porous silicon particles through the above process. Accordingly, a specific surface area of the anode active material may be significantly reduced by improving porous silicon coverage characteristics.

In addition, the molded body may be formed by applying a pressure of 10 tons to 30 tons. When the pressure is applied within the range, the binding force between the nano-silicon particles and the carbon layer may be additionally further increased.

In addition, in the forming of the molded body, the powder prepared by the spray process is charged in a mold and then, formed into a block-shaped molded body by using a press equipment. However, the preparing of the molded product may not be limited thereto.

Subsequently, the molded body may be heat-treated.

Herein, the heat treatment may be performed at 700 °C to 1000 °C under an inert atmosphere. During the heat treatment, the molded body may be carbonized.

Specifically, the heat treatment under the above conditions is to prevent oxidation of Si and apply high temperature viscosity characteristics to the pitch to increase the binding force.

As described above, by the above processes, the pitch and the aqueous binder may be carbonized into soft carbon and hard carbon, respectively.

Finally, the pulverizing and sieving the heat-treated molded body may be performed.

At this time, the heat-treated molded body may be pulverized using a jet mill, a pin mill, or a combination thereof. After pulverizing, sieving may be performed to obtain an anode active material having an average particle diameter (D50) of 10 µm to 15 µm.

After the heat-treating of the molded body, an anode active material for a lithium secondary battery in which the pitch is present in the shape of a carbon layer may be obtained.

The aforementioned anode active material may be usefully used for an anode of a lithium secondary battery. That is, a lithium secondary battery according to an embodiment includes an anode including the aforementioned anode active material and an electrolyte together with a cathode.

A lithium secondary battery according to an embodiment may include an electrode assembly including a cathode, an anode, and a separator disposed between the cathode and anode. Such an electrode assembly may be wound or folded and accommodated in a case to constitute a lithium secondary battery.

Herein, the case may have a shape such as a cylindrical shape, a square shape, and a thin film type, and may be appropriately modified according to the type of device to be applied.

The anode may be manufactured by mixing an anode active material, a binder, and optionally a conductive material to prepare preparing a composition for forming an anode active material layer, and then coating the composition on an anode current collector.

The anode current collector may be, for example, a copper foil, a nickel foil, a stainless steel foil, a titanium foil, a nickel foam, a copper foam, a polymer substrate coated with a conductive metal, or a combination thereof.

The anode active material may include a porous silicon-carbon-based composite in which a plurality of nano-silicon particles are embedded in a carbon-based material as described in an embodiment. Detailed descriptions of each configuration are the same as those described above, and will be omitted here.

The binder may include polyvinyl alcohol, a carboxymethylcellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, or polypropylene or the like, but is not limited thereto. The binder may be mixed in an amount of 1 wt% to 30 wt% based on a total amount of the composition for forming the anode active material layer.

The conductive material may be any one having conductivity while not causing chemical changes in a battery without particular limitation. Specifically the conductive material may include natural graphite, artificial graphite, and the like graphite; carbon black such as acetylene black, ketjen black, channel black, furnace black, lamp black, thermal black, and the like; a conductive fiber such as a carbon fiber, a metal fiber, and the like; carbon fluoride; a metal powder such as aluminum, nickel powder, and the like; a conductive whisker such as zinc oxide, potassium titanate, and the like; a conductive metal oxide such as titanium oxide and the like; and a conductive material such as a polyphenylene derivative and the like. The conductive material may be included in an amount of 0.1 wt% to 30 wt% based on a total amount of the composition for forming an anode active material layer.

Next, the cathode may be manufactured by mixing a cathode active material, a binder, and optionally a conductive material to prepare a composition for forming a cathode active material layer, and then coating the composition to a cathode current collector. Herein, the binder and the conductive material are used in the same manner as in the case of the aforementioned anode.

The cathode current collector may be, for example, stainless steel, aluminum, nickel, titanium, sintered carbon, or aluminum or stainless steel which is surface-treated with carbon, nickel, titanium, silver, or the like.

The cathode active material may include a compound (lithiated intercalation compound) capable of intercalating and deintercallating lithium.

Specifically, the cathode active material may include, at least one composite oxide of lithium and a metal of cobalt, manganese, nickel, or a combination thereof, and specific examples thereof may be a compound represented by one of the following chemical formulas. LiₐA_{1-b}R_{b}D₂(wherein, in the above Chemical Formula, 0.90 ≤ a ≤ 1.8 and 0 ≤ b ≤ 0.5); LiₐE_{1-b}R_{b}O_{2-c}D_{c} (wherein, in the above chemical formula, 0.90≤ a ≤ 1.8, 0 ≤ b ≤ 0.5, and 0 ≤ c ≤ 0.05); LiE_{2-b}R_{b}O_{4-c}D_{c} (wherein, in the above chemical formula, 0 ≤ b ≤ 0.5, 0 ≤ c ≤ 0.05); LiₐNi_{1-b-c}Co_{b}R_{c}D_{α} (wherein, in the above chemical formula, 0.90 ≤ a ≤ 1.8, 0 ≤ b ≤ 0.5, 0 ≤ c ≤ 0.05 and 0 < α ≤ 2); LiaNi_{1-b-c}Co_{b}R_{c}O_{2-α}Z_{α} (wherein, in the above chemical formula, 0.90≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above chemical formula, 0.90 ≤ a ≤ 1.8, 0 ≤ b ≤ 0.5, 0 ≤ c ≤ 0.05 and 0 < α < 2); LiaNi_{1-b-c}Mn_{b}R_{c}Da_{α} (wherein, in the above chemical formula, 0.90 ≤ a ≤ 1.8, 0 ≤ b ≤ 0.5, 0 ≤ c ≤ 0.05 and 0 < α ≤ 2); LiaNi_{1-b-c}Mn_{b}R_{c}O_{2-α}Z_{α} (wherein, in the above chemical formula, 0.90 ≤ a ≤ 1.8, 0 ≤ b ≤ 0.5, 0 ≤ c ≤ 0.05 and 0 < α < 2); LiaNi_{1-b-c}Mn_{b}R_{c}O_{2-α}Z₂ (wherein, in the above chemical formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above chemical formula, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂ (wherein, in the above chemical formula, 0.90 ≤ a ≤ 1.8 and 0.001 ≤ b ≤ 0.1); LiₐCoG_{b}O₂ (wherein, in the above chemical formula, 0.90 ≤ a ≤ 1.8 and 0.001 ≤ b ≤ 0.1); LiₐMnG_{b}O₂ (wherein, in the above chemical formula, 0.90≤ a ≤ 1.8 and 0.001 ≤ b ≤ 0.1); LiₐMn₂G_{b}O₄ (wherein, in the above chemical formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above Chemical Formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The electrolyte for filling the lithium secondary battery may include a non-aqueous electrolyte or a commonly-known solid electrolyte, in which a lithium salt is dissolved.

The lithium salt may include, for example, at least one selected from LiPF₆, LiBF₄, LiSbF₆, LiAsF₆, LiClO₄, LiCF₃SO₃, Li(CFsSO₂)₂N, LiC₄F₉SO₃, LiSbF₆, LiAlO₄, LiAlCl₄, LiCI, and Lil.

The solvent of the non-aqueous electrolyte may include, for example, a cyclic carbonate dimethyl carbonate such as ethylene carbonate, propylene carbonate, butylenes carbonate, vinylene carbonate, and the like; a linear carbonate such as methylethyl carbonate, diethyl carbonate, and the like; ester series such as methyl acetate, ethyl acetate, propyl acetate, methyl propionate, ethyl propionate, γ -butyrolactone, and the like; ether series such as 1,2-dimethoxyethane, 1,2-diethoxyethane, tetrahydrofuran, 1,2-dioxane, 2-methyltetrahydrofuran, and the like; nitrile series such as acetonitrile and the like ; amide series such as dimethylformamide; and the like, but is not limited thereto. These may be used alone or in a combination. In particular, cyclic carbonate and linear carbonate can be used as a mixed solvent.

The electrolyte may include a gel-type polymer electrolyte prepared by impregnating an electrolyte solution in a polymer electrolyte such as polyethylene oxide, polyacrylonitrile, and the like or an inorganic solid electrolyte such as Lil, Li₃N, and the like.

The separator may be an olefin-based polymer such as polypropylene having chemical resistance and hydrophobicity; sheets or non-woven fabrics made of glass fiber, polyethylene, or the like. When a solid electrolyte such as a polymer is used as the electrolyte, the solid electrolyte may also serve as a separator.

The following examples illustrate the present invention in more detail. However, the following examples are only preferred examples of the present invention and the present invention is not limited to the following examples.

### Example 1

### (1) Preparation of Anode Active Material

Dry nano-silicon powder was milling-mixed with a carbon-based raw material under dry conditions to prepare a porous silicon-carbon-based mixture. Herein, Example 1 used a combination of graphite particles and pitch particles as the carbon-based raw material.

Specifically, based on 100 wt% the porous silicon-carbon-based mixture, a content of Si was 40 wt%, and a content of graphite was 30wt%, and a content of pitch was 30 wt%.

Subsequently, an aqueous binder was added to the porous silicon-carbon-based mixture to prepare a mixed powder. Specifically, based on 100 parts by weight of the porous silicon-carbon-based mixture, 5 parts by weight of the aqueous binder was used. Herein, the aqueous binder was polyvinyl alcohol (PVA).

Subsequently, based on100 parts by weight of the mixed powder, 200 parts by weight of distilled water as a solvent was added thereto to prepare a mixed solution.

The solution was treated in a spray drying method to obtain primary particles.

Then, the primary particle powder was charged into a mold, and a uniaxial pressure molding machine was used to manufacture a molded body. Specifically, a pressure of 22 tons was applied thereto for 20 minutes at 250 °C. After the molding, the molded body was air-cooled. The temperature at which the press-molding was performed was 50 °C higher than a softening point of the pitch.

The molded secondary particles had a block shape.

Then, the molded body was heat-heated at 900 °C under an inert atmosphere and then, naturally cooled down to room temperature.

After the cooling, the molded body was pulverized with the range of 10 µm to 15 µm based on D50 by using a Jet mill. After the pulverization, the pulverized product was sieved with a #635 mesh (20 µm) to obtain a final anode active material.

### (2) Manufacture of Lithium Secondary Battery Cell (Half-cell)

The anode active material in the (1), a binder (SBR-CMC), and a conductive material (Super P) were mixed in a weight ratio of 95.8:3.2:1 among anode active material : binder : conductive material and added to distilled water and then, uniformly mixed to prepare slurry.

The slurry was uniformly coated on a copper (Cu) current collector, pressed with a roll press, and dried to manufacture an anode. Specifically, a loading amount thereof was 5 mg/cm² to have electrode density of 1.2 g/cc to 1.3 g/cc.

Lithium metal (Li-metal) was used as a counter electrode, and an electrolyte solution prepared by dissolving 1 mol of LiPF6a in a mixed solvent of ethylene carbonate (EC): dimethyl carbonate (DMC) in a volume ratio of 1:1 was used.

The anode, the lithium metal, and the electrolyte solution were used according to a common manufacturing method to manufacture a CR 2032 half coin cell.

### Example 2

### (1) Preparation of Anode Active Material

An anode active material was prepared according to the same method as the (1) of Example 1 except that pitch was used as the carbon-based raw material to prepare the porous silicon-carbon-based mixture.

As a result, based on 100 wt% of the porous silicon-carbon-based mixture, a content of Si was 40 wt%, and a content of the pitch was 60 wt%.

### (2) Manufacture of Lithium Secondary Battery Cell

A lithium secondary battery cell was manufactured according to the same method as the (2) of Example 1 by using the anode active material of the (1).

### Comparative Example 1

### (1) Preparation of Anode Active Material

An anode active material was prepared according to the same method as the (1) of Example 1 except that the preparation of the molded body was excluded.

As a result, based on 100 wt% of the porous silicon-carbon-based mixture, a content of Si was 40 wt%, a content of graphite was 30 wt%, and a content of pitch was 30 wt%.

### (2) Manufacture of Lithium Secondary Battery Cell

A lithium secondary battery cell was manufactured according to the same method as the (2) of Example 1 by using the anode active material of the (1).

### Comparative Example 2

### (1) Preparation of Anode Active Material

An anode active material was prepared according to the same method as the (1) of Example 1 except for the water-based spraying process was excluded during the preparation of the porous silicon-carbon-based mixture.

Specifically, in Example 2, pitch was added to a porous silicon carbon compound to prepare mixed powder through the dry-milling, and then, the mixed powder was immediately press-molded. As a result, based on 100 wt% of the porous silicon-carbon-based mixture, a content of Si was 40 wt%, a content of graphite was 30 wt%, and a content of the pitch was 30 wt%.

### (2) Manufacture of Lithium Secondary Battery Cell

A lithium secondary battery cell was manufactured according to the same method as the (2) of Example 1 except that the anode active material of the (1) was used.

### Comparative Example 3

### (1) Preparation of Anode Active Material

An anode active material was prepared according to the same method as the (1) of Example 1 except that ethanol instead of the distilled water was used through organic-based spray drying to prepare the porous silicon-carbon-based mixture. During the organic-based spraying drying, since the powder had very satisfactory dispersibility for the ethanol solvent, a separate aqueous binder was not added thereto.

As a result, based on 100 wt% of the porous silicon-carbon-based mixture, a content of Si was 40 wt%, a content of graphite was 30 wt%, and a content of pitch was 30 wt%.

### (2) Manufacture of Lithium Secondary Battery Cell

A lithium secondary battery cell was manufactured according to the same method as the (2) of Example 1 except that the anode active material of the (1) was used.

### Comparative Example 4

### (1) Preparation of Anode Active Material

15 wt% of pitch based on 100 wt% of the Si-C composite anode active material (a core) according to Example 1 was coated on the surface of the core.

Herein, the pitch had a softening point of 100 °C or higher.

In addition, the pitch was coated through a dry coating process using a general milling device with a rotation al speed of 400 RPM or less.

When the coating was completed, a heat treatment in a furnace under an inactive atmosphere was performed to synthesize a final Si-C composite anode material in a porous core-shell state.

### (2) Manufacture of Lithium Secondary Battery Cell

The anode active material of the (1) was used to manufacture a lithium secondary battery cell according to the same method as the (2) of Example 1.

### Experimental Example: Measurement of Electrochemical Characteristics (Coin Half Cell)

### Measurement of Tap Density

According to ASTM-B527, 10 g of powder was put in a 50 mL container and 3000 cycles tapped at 284 cycles/min to measure packing density.

### Measurement of Specific Surface Area

A BET method (a surface area and porosity analyzer, ASAP2020, Micromeritics Instrument Corp.) was used to measure a specific surface area.

### Measurement of Initial Charge/Discharge Capacity and Efficiency

The active materials according to the examples and comparative examples were respectively applied to half-cells and tested.

Specifically, the cells were driven under charge conditions of 0.1 C, 5 mV, and cut-off at 0.005 C and under discharge conditions of 0.1 C and cut-off at 1.5 V, and initial discharge capacity and initial efficiency of the cells were provided in Table 1.

### Measurement of Expansion Rate

The half-cells of Examples 1 to 3 and Comparative Example 1 were used.

Expansion rates thereof were evaluated by 1^{st}, 20^{th}, and 50^{th} cycles driving the cells under charge conditions of 0.1 C, 5 mV, and cut-off at 0.005 C and under discharge conditions of 0.1 C and cut-off at 1.5 V and then, disassembling the cells to calculate thickness variation ratios of the electrodes therefrom.

### Measurement of Cycle-life

A cycle-life was measured by manufacturing a full cell.

Specifically, a CR2032 coin full cell was manufactured by mixing commercially-available natural graphite and the synthesized Si-carbon composite anode material to maintain anode capacity at 410 mAh/g and using LCO as a cathode, and then, long-term cycle-life of the full cell was measured through 0.5 C (charge)/1.0 C (discharge). Herein, an anode had a composition of active material : conductive material : CMC : SBR = 95.8:1:1.7:1.5 and maintained rolling density of 1.6 g/cc, and the cathode maintained a ratio of active material : conductive material : binder = 94:3:3 and rolling density of 3.3 g/cc. In the long-term cycle-life test, an electrolyte solution prepared by using EC : DEC = 1: 1 (1.0 M LiPF6) was used.

A test was performed by comparing Comparative Example 1 and Example 1 in order to examine effects of carbon layers, and a long-term cycle-life of Example 2 was evaluated to examine a composition effect of raw materials (graphite and pitch) of the carbon layers.

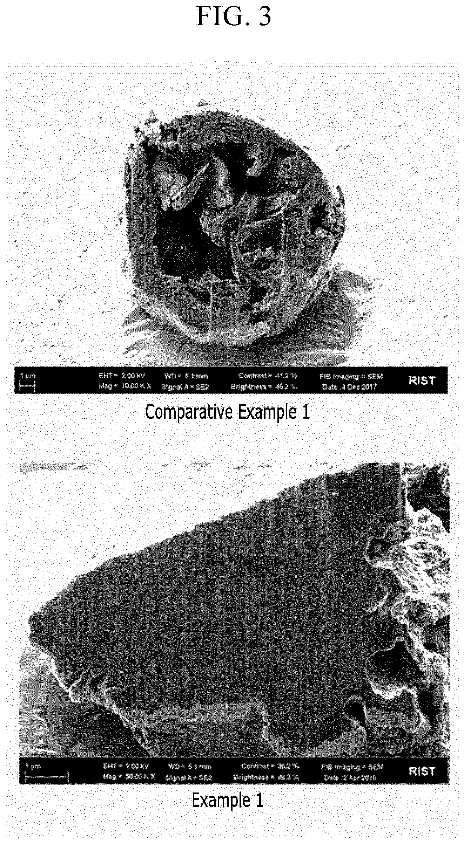

Specifically, the results are also shown in FIGS. 3 to 4 shown later.

**(Table 1)**

| | Tap density (g/cc) | Specific surface area (m²/g) | Discharge capacity (mAh/g) | Initial efficiency (%) | Cycle-life (%, @ 50 cycles) |
|---|---|---|---|---|---|
| Comparative Example1 | 0.32 | 23.29 | 1357 | 82.7 | 29.7 |
| Example 1 | 0.78 | 4.65 | 1322 | 85.1 | 72.1 |
| Comparative Example 2 | 0.45 | 8.96 | 1285 | 83.4 | 31.4 |
| Example 2 | 0.72 | 2.68 | 1388 | 86.4 | 44.4 |
| Comparative Example 3 | 0.71 | 5.22 | 1220 | 84.9 | 69.5 |
| Comparative Example 4 | 0.54 | 6.84 | 1185 | 83.5 | 85.4 |

As shown in Table 1, Comparative Example 1 exhibited a specific surface area of 23.29 m²/g due to inherent (porous) characteristics of the spray drying method. This specific surface area result was reduced from 64.85m²/g, that of the nano-silicon particles.

On the other hand, Examples 1 to 2 exhibited a significantly smaller specific surface area than Comparative Example 1. The reason is that since the press-molding was performed at the softening point of the pitch or higher, some of the pitch had certain viscosity, and surface coverage characteristics of the nano-silicon particles were improved.

On the other hand, Example 1 had a specific surface area of 4.65 m²/g, which was more excellent than 8.96 m²/g of Comparative Example 2. In Comparative Example 2, the water-based spray drying process was not performed unlike in Example 1.

In other words, in Example 1, the mixed powder was mixed with distilled water for the spraying process to prepare the mixed solution. Accordingly, since pitch dispersion characteristics were improved through ultrasonic wave dispersion in an aqueous solution state, surface coverage characteristics of the nano-silicon particles were improved, compared with Comparative Example 2.

In addition, Example 2 in which nano-silicon particles and pitch alone were mixed exhibited the most excellent specific surface area of 2.68 m²/g. The reason is that dispersibility between the nano-silicon particles and the pitch was increased and thereby, further improved the binding force between the nano-silicon particles and the carbon layer after the press-molding.

Furthermore, a finly pulverization effect of the pitch particles well dispersed during the spray drying was simultaneously reflected.

On the other hand, Examples 1 and 2 and Comparative Example 3 wherein the press-molding was performed exhibited excellent tap density of greater than 0.7 g/cc. The reason is that the press-molding increased high density of the particles of the composite material.

However, Comparative Example 2 exhibited tap density of only 0.45 g/cc despite the press-molding. Specifically, as in Comparative Example 2, when the water-based spraying was not performed, dispersion characteristics were deteriorated and thereby, lowered the tap density.

More specifically, the spray drying process played a role of well dispersing a raw material, but in Comparative Example 2, the press-molding was performed immediately after the dry milling and thereby, deteriorated the dispersion effect, agglomerating the pitch. Accordingly, in the subsequent firing, volatile components were volatilized, forming more pores and deteriorating the tap density.

In addition, Comparative Example 1 exhibited initial efficiency of only 82.7% due to the pores inside the particles.

On the other hand, in the examples, the carbon layers improved nano-silicon particle surface coverage characteristics and thus increased the binding force, improving initial efficiency.

In particular, the initial efficiency characteristics were expressed due to the same reason as in the aforementioned specific surface area.

In addition, even when a carbon material was coated on the shell portion as in Comparative Example 4, a carbon source could be pressed into the inner pores. However, a specific surface area of the obtained anode active material was inferior to those of the examples according to one embodiment of the present invention.

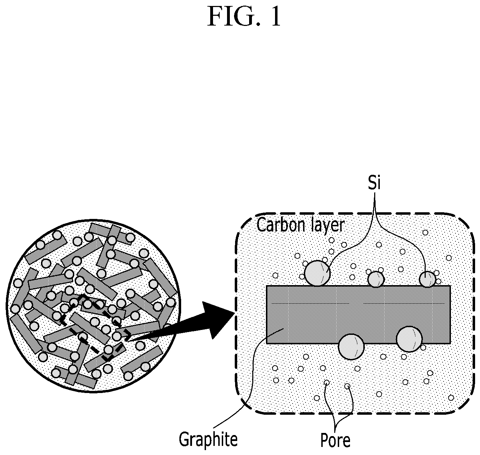

This may also be confirmed through FIGS. 1 to 7 of the present application.

FIG. 1 is a schematic view of an anode active material according to Example 1.

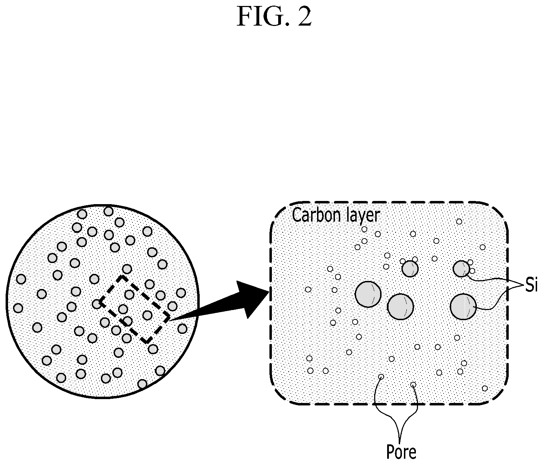

FIG. 2 is a schematic view of an anode active material according to Example 2.

FIG. 3 is a cross-sectional view of the anode active material according to Example 1 and Comparative Example 1 with SEM.

As shown in FIG. 3, in the examples, since the press-molding at a softening point or higher formed a carbon layer on the surface of the nano-silicon particles due to the pitch, there were not many pores.

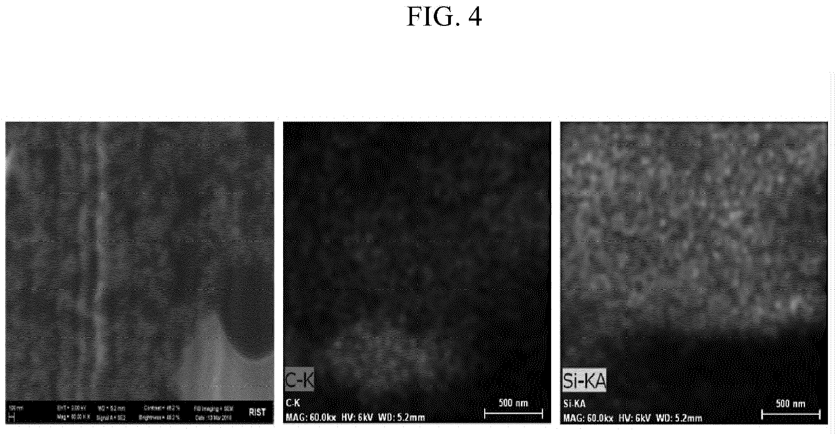

FIG. 4 shows the EDS mapping analysis result of Example 1.

As shown in FIG. 4, in Example 1, nano-silicon particles having a size of several tens of nm were well dispersed in the carbon layer.

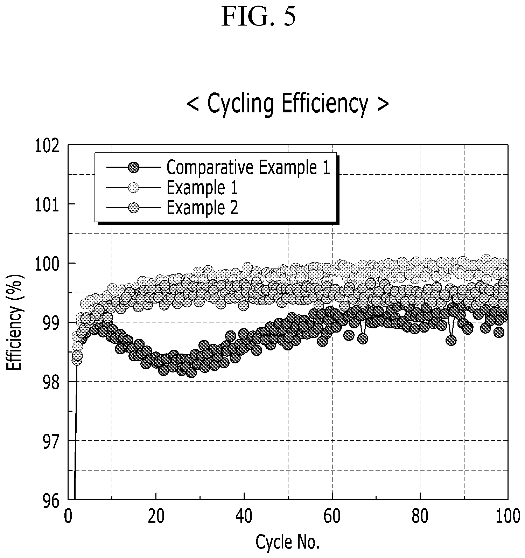

FIG. 5 is a graph showing initial efficiency of the full cells (CR2032 coin full cells) according to Comparative Example 1 and Examples 1 and 2 depending on a cycle.

As shown in FIG. 5, when charge-discharge efficiency characteristics up to 100 cycles were measured, Examples 1 and 2 in which pores were decreased exhibited cycling efficiency characteristics of greater than 99%. The reason is that reversible charge-discharge was achieved.

On the contrary, Comparative Example 1 exhibited low cycling efficiency, because the expanded nano-silicon particles lost a conductive path during the discharge. Particularly, the efficiency sharply decreased up to 10 to 40 cycles.

Accordingly, an interfacial binding force between the nano-silicon particles and the carbon layer in the Si-C composite anode material turned out to be very important.

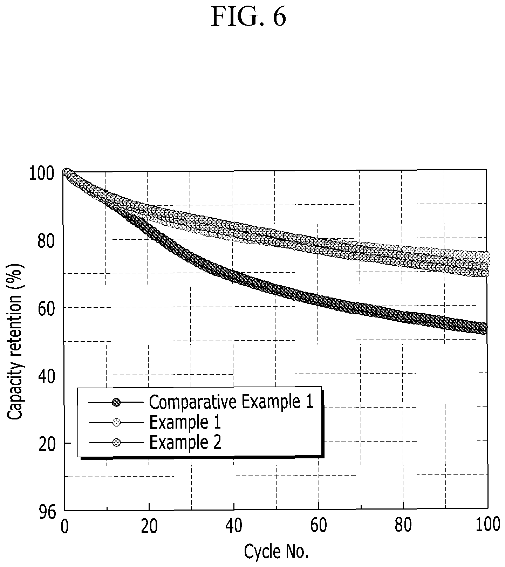

FIG. 6 is a graph showing capacity retention rates (cycle-life) according to the cycle of the full cells (CR2032 coin full cells) according to Comparative Example 1 and Examples 1 and 2.

Specifically, as a result of the 100 cycle 0.5 C charge - 1.0 C discharge test of the cells of Comparative Example 1 and Examples 1 and 2, the examples secured 20% or more improved long-term cycle-life characteristics compared with the comparative example.

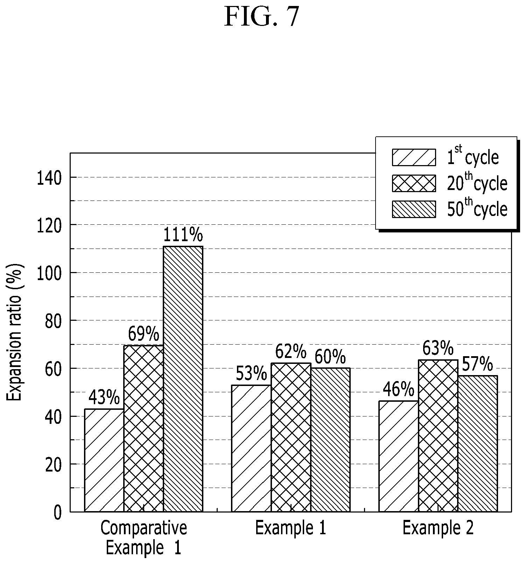

FIG. 7 is a graph showing expansion rates according to the cycle of the half cells (CR2032 coin half cells) according to Comparative Example 1 and Examples 1 and 2.

As shown in FIG. 7, Comparative Example 1 exhibited an increased volume as the cycles were increased, even though the nano-silicon particles did not participate in a reaction due to the conductive path loss during the charge.

On the contrary, in Examples 1 and 2, expansion rates were not greatly increased in the 50 cycle charge and discharge test, compared with in the one cycle charge and discharge.

In this way, in Examples 1 and 2, dispersibility was improved due to the water-based spray drying method and a binding force of the nano-silicon particles with the carbon layer was increased due to the press-molding process at a high temperature, so that the expansion rates also were controlled to be low.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

## Claims

1. An anode active material for a lithium secondary battery, comprising
a porous silicon-carbon-based composite in which a plurality of nano-silicon particles are embedded in a carbon-based material,
wherein the carbon-based material comprises graphite particles, soft carbon, hard carbon, or a combination thereof, and
the soft carbon, in the carbon-based material, is in the form of a carbon layer.

2. The anode active material of claim 1, wherein the graphite particles, hard carbon, or a combination thereof are included in the carbon layer.

3. The anode active material of claim 2, wherein a softening point of the pitch is 250 °C or higher.

4. The anode active material of claim 3, wherein a porosity of the anode active material is 30 volume% or less based on the total volume of the anode active material.

5. The anode active material of claim 4, wherein a specific surface area (BET) of the anode active material is 5.0 m²/g or less.

6. The anode active material of claim 5, wherein an expansion rate based on the 50^{th} cycle of the anode active material is 70% or less.

7. The anode active material of claim 6, wherein a content of the nano-silicon is 25 wt% to 50 wt% based on 100 wt% of the porous silicon-carbon-based composite.

8. A method of preparing an anode active material for a lithium secondary battery, comprising
mixing nano-silicon particles and a carbon-based raw material by dry milling to prepare a porous silicon-carbon-based mixture;
mixing the porous silicon-carbon-based mixture with an aqueous binder to prepare a mixed powder;
mixing the mixed powder with distilled water to prepare a mixed solution; spray-drying the mixed solution to prepare primary particles;
inserting the primary particles in a mold and press-molding to prepare a molded body;
heat-treating the molded body; and
pulverizing and sieving the heat-treated molded body.

9. The method of claim 8, wherein the carbon-based raw material comprises graphite particles, pitch, or a combination thereof.

10. The method of claim 9, wherein
before the preparing of the molded body,
the pitch exists in the form of powder particles, and the particle diameter (D50) of the pitch is less than 2 µm.

11. The method of claim 9, wherein a softening point of the pitch is 250 °C or higher.

12. The method of claim 11, wherein
the preparing of the molded body is performed
in a temperature range of 50 to 100 °C or higher than the softening point of the pitch.

13. The method of claim 12, wherein
in the preparing of the molded body,
the pitch has a viscosity.

14. The method of claim 9, wherein
after heat-treating of the molded body,
the pitch exists in the shape of a solidified carbon layer.

15. The method of claim 14, wherein
by heat-treating of the molded body,
the pitch is carbonized into soft carbon, and the aqueous binder is carbonized into hard carbon.

16. The method of claim 9, wherein
the heat-treating the molded body is performed in an inert atmosphere and at less than 1000 °C.

17. A lithium secondary battery, comprising
a cathode;
an anode; and
an electrolyte,
wherein the anode comprises the anode active material for a lithium secondary battery of any one of claim 1 to claim 7.
